# FASCICULE DE BREVET EUROPEEN

(11) **EP 1 004 627 B1**
(45) Date de publication et mention de la délivrance du brevet: **07.04.2004**
(21) Numéro de dépôt: 99402912.2
(22) Date de dépôt: 23.11.1999
(51) Int. Cl.: C08K 13/06, C08J 3/20

(54) **Matériaux de résines thermoplastiques renforcées par des fibres longues et incorporant des charges, et leur procédé de fabrication**
Durch lange Fasern verstärktes thermoplastisches Harzmaterial gekennzeichnet durch die Zugabe von Füllstoffen und Verfahren zu dessen Herstellung
Long fibre reinforced thermoplastic resin materials characterised by incorporating fillers and process for their preparation

(30) Priorité: 23.11.1998 FR 9814700; 17.02.1999 FR 9901929
(43) Date de publication de la demande: 31.05.2000
(73) Titulaire: Atofina, 92800 Puteaux (FR); APPRYL S.N.C., F-92400 Courbevoie (FR)
(72) Inventeur: Dupuy, Carole, 27300 Bernay (FR); Jacquemet, Régis, 62000 Dainville (FR)
(74) Mandataire: Chaillot, Geneviève

(56) Documents cités:
- EP-A- 0 342 080
- GB-A- 1 094 439

## Description

La présente invention concerne les résines thermoplastiques renforcées par des fibres longues et leur fabrication. Ces résines sont généralement obtenues sous la forme de joncs ou rubans, découpés ensuite en granulés, et elles sont adaptées au moulage notamment par injection, compression ou extrusion transfert. La présente invention concerne un moyen d'introduire une ou plusieurs charges solides dans une composition comprenant une telle résine et de telles fibres. On vise par là à apporter des propriétés supplémentaires à la résine renforcée par les fibres, suivant le type de charge choisi, en particulier à augmenter la rigidité du matériau. L'introduction de la charge peut cependant avoir d'autres fonctions que celle de modifier les propriétés mécaniques. On peut entre autres citer comme charges, les colorants, les charges antistatiques, les stabilisants, etc.

Il est bien connu de renforcer les résines thermoplastiques par des fibres longues. Un moyen traditionnel était de gainer par extrusion des mèches de fibres ou des rovings de résines thermoplastiques. Un problème se posait cependant, décrit et partiellement résolu dans le brevet britannique n° 1 094 439, résultant de la mauvaise adhérence aux fibres de certaines résines thermoplastiques, comme les polyoléfines. Il a été remédié à cet inconvénient en imprégnant les fibres, préalablement à leur revêtement par la résine thermoplastique choisie (pouvant être appelée résine thermoplastique de revêtement, de gainage ou de matrice), d'un polymère thermoplastique de mouillage (pouvant aussi être appelé polymère ou résine thermoplastique d'imprégnation), tel qu'une polyoléfine modifiée par greffage d'un acide polycarboxylique éthyléniquement insaturé. Les méthodes d'imprégnation étaient toutefois peu satisfaisantes, la plus réaliste consistant à faire passer les fibres en continu dans une solution de polymère d'imprégnation avant le revêtement final. Outre le risque de laisser dans le matériau des traces de solvant, le procédé était peu pratique et onéreux par le fait qu'il nécessitait une manipulation inopportune de solvant.

Dans le brevet américain US-A-3 993 726, a été décrit un procédé de fabrication en continu d'articles en résine thermoplastique renforcée de fibres longues de verre. Selon la technique décrite, le roving est imprégné d'un mélange de résine thermoplastique de mouillage et de résine thermoplastique à renforcer, dans une filière en tête d'équerre alimentée par une extrudeuse. L'imprégnation des fibres se fait ici en épanouissant les fibres du roving dans la filière et en faisant passer lesdites fibres et le mélange thermoplastique dans une zone d'embarrage pour bien faire pénétrer la matière entre chaque fibre. Ce système était peu satisfaisant, car le polymère de mouillage dilué à l'autre polymère perdait la majeure partie de son efficacité.

Pour pallier ces inconvénients, la Société déposante a alors mis au point un procédé qui fait l'objet de son brevet européen EP-B-0 342 080 et qui permet de renforcer par des fibres le maximum de résine thermoplastique de matrice en utilisant le minimum de résine d'imprégnation grâce à une méthode simple de répartition maximum de ladite résine d'imprégnation au travers des fibres des rovings. Le procédé consiste à faire passer dans une première étape les rovings, après avoir soigneusement épanoui les fibres, dans une filière alimentée, en tête d'équerre, en résine thermoplastique d'imprégnation. Après imprégnation des fibres, les rovings passent, dans une seconde étape, à travers une seconde filière, également alimentée en tête d'équerre, alimentée en résine thermoplastique de matrice compatible avec la résine thermoplastique d'imprégnation. Conformément à un mode de réalisation particulier, on procède de la façon suivante :
- Dans une première étape, les rovings, préalablement à leur passage dans la filière d'imprégnation, sont épanouis de façon à étaler sensiblement côte à côte chacune des fibres de roving. Les rovings se trouvent dans ce cas sous forme de nappe ou de ruban constitué d'une succession de fibres individuelles continues parallèles. Pour réaliser cet alignement des fibres en épanouissant le roving, on introduit les rovings dans la filière d'imprégnation alimentée en polymère thermoplastique d'imprégnation fondu après les avoir fait passer dans au moins une chicane d'une zone d'embarrage qui, forçant le roving, provoque l'étalement des fibres le constituant. La nappe ou le ruban ainsi formé est ensuite imprégné de résine thermoplastique d'imprégnation et tiré, avant la filière de conformation, dans un nouveau système d'embarrage formé de chicanes sensiblement parallèles à la première chicane ou aux premières chicanes. Dans ce système, la nappe ou le ruban imprégné de résine thermoplastique d'imprégnation passe dans au moins deux chicanes opposées et parallèles l'une par rapport à l'autre. Dans ces conditions, l'ensemble des fibres imprégnées de résine thermoplastique d'imprégnation est, dans la première chicane, écrasé sur une de ses faces forçant la résine à s'infiltrer à l'état fondu entre les fibres pour passer vers la face opposée. L'effet inverse se produit quand l'ensemble des fibres imprégnées entre en contact avec la chicane opposée. Ce système d'embarrage avant et après le contact avec le polymère thermoplastique d'imprégnation permet l'imprégnation individuelle des fibres avec le minimum de polymère. Les fibres imprégnées passent enfin dans une filière de conformation permettant de réaliser des rubans ou des joncs.
- En sortie de filière de conformation, les fibres imprégnées de résine thermoplastique d'imprégnation sont dans la deuxième étape gainées par la résine thermoplastique à renforcer. Pour ce faire, les fibres continues imprégnées de la résine thermoplastique d'imprégnation à une température de préférence supérieure d'environ 40°C à celle de fusion de ladite résine d'imprégnation passent dans une filière alimentée en tête d'équerre classique, telle qu'utilisée pour le revêtement de fil ou de câble. Cette filière est alimentée en résine thermoplastique destinée à être renforcée de fibres et se situe sensiblement dans l'alignement de la filière de conformation du système d'embarrage. En sortie de filière, les rubans ou joncs sont granulés. Ces granulés à fibres longues, c'est-à-dire dont la longueur des fibres correspond à celle du granulé, sont comme indiqué ci-dessus particulièrement adaptés à l'injection, la compression et l'extrusion transfert.

Le renforcement des résines thermoplastiques de matrice, telles que le polypropylène, par des fibres longues, permet ainsi d'obtenir des matériaux à très haute rigidité et à très haute résistance au choc simultanément. Cependant, la présence de fibres longues dans le matériau peut induire des défauts de surface sur les pièces injectées (pare-chocs de véhicules par exemple) à partir de granulés de ces résines thermoplastiques renforcées. Dans le meilleur des cas, on obtient des surfaces rugueuses où l'on peut deviner la présence des fibres.

Cherchant à introduire une ou plusieurs charges solides dans une composition de résine thermoplastique renforcée par des fibres longues, comme cela a déjà été indiqué ci-dessus, la Société déposante a découvert que la ou les charges solides ne doivent pas être introduites dans le polymère d'imprégnation. Ceci lui a également permis de découvrir que l'introduction d'au moins une charge solide dans la résine thermoplastique de matrice, par conséquent dans la partie extérieure des joncs ou rubans, peut améliorer l'aspect de surface des pièces injectées, tout en permettant d'apporter les propriétés supplémentaires recherchées. Dès lors que l'on souhaitera que les fibres ne confèrent plus de rugosité de surface au produit injecté, il sera préférable d'introduire une plus forte quantité de charge.

La présente invention a donc d'abord pour objet un matériau de résine thermoplastique renforcée par des fibres longues, adapté au moulage notamment par injection, compression ou extrusion transfert, ledit matériau comprenant des fibres continues sensiblement parallèles noyées individuellement dans une résine thermoplastique d'imprégnation, l'ensemble étant gainé de la matière thermoplastique destinée à être renforcée par lesdites fibres, appelée résine thermoplastique de matrice, caractérisé par le fait qu'au moins une charge a été incorporée à la résine thermoplastique de matrice.

Dans son sens le plus général, une charge susceptible d'être utilisée conformément à la présente invention peut être définie comme étant un solide ne fondant pas dans les conditions d'utilisation dans le cadre de la présente invention, et ne présentant généralement pas de point de fusion en dessous de 400°C.

La charge ou au moins l'une des charges peut être une charge organique, étant alors par exemple constituée par du noir de carbone. On peut citer un noir de carbone ayant une surface spécifique de 50 à 1000 m²/g.

La charge ou au moins l'une des charges peut aussi être une charge minérale, en particulier une charge minérale ayant une surface spécifique inférieure à 50 m²/g et plus généralement inférieure à 20 m²/g. A titre d'exemples de charges minérales, on peut citer :
(a) les charges minérales classiques telles, que :
   (a1) la wollastonite, le kaolin calciné ou non, le talc, le mica, la craie précipitée ou non, le quartz, la silice, CaSO₄, la dolomite (CaCO₃•MgCO₃), la montmorillonite (aluminosilicate), ces charges ayant une taille généralement comprise entre 0,05 µm et 1 mm ;
   (a2) les billes de verre, ayant un diamètre généralement compris entre 0,5 µm et 5 mm ;
   (a3) les fibres de verre ou de carbone, ayant une longueur généralement comprise entre 100 microns et 20 mm et un diamètre généralement compris en 0,5 micron et 1 mm ;
(b) les charges anti-feu, telles que Al(OH)₃, Mg(OH)₂, la huntite (3MgCO₃•CaCO₃), l'hydromagnésite (3MgCO₃•Mg(OH)₂•3H₂O), Sb₂O₃, Sb₂O₅, l'ammonium (poly)phosphate et la mélamine (poly)phosphate, ces charges ayant une taille généralement comprise entre 0,05 µm et 1 mm ;
(c) les charges à haute densité, telles que BaSO₄, ZrSiO₄, Fe₃O₄, ces charges ayant une taille généralement comprise entre 0,05 µm et 1 mm ;
(d) les charges conductrices, telles que :
   (d1) les fibres métalliques, telles que les fibres d'aluminium, de cuivre, de fer, d'acier inoxydable, ces fibres ayant une longueur généralement comprise entre 100 microns et 20 mm et un diamètre généralement compris entre 0,5 micron et 1 mm ;
   (d2) les fibres de verre recouvertes de métal tel que le nickel, ces fibres ayant une longueur généralement comprise entre 100 microns et 20 mm et un diamètre généralement compris entre 0,5 micron et 1 mm ;
   (d3) les particules métalliques, telles que les flocons d'aluminium, ayant une dimension généralement de 0,1 à 10 mm² x 5 µm à 1 mm d'épaisseur ; et
   (d4) les particules métallisées, telles que le mica recouvert de nickel ou les billes de verre recouvertes d'argent.

Une famille particulière de charges minérales est celle des charges minérales particulaires, ayant un diamètre moyen de taille des particules allant de 20 nm à 500 µm, plus particulièrement de 50 nm à 100 µm.

Par ailleurs, on peut utiliser une charge ou au moins une charge qui a été traitée en surface. Les charges peuvent en effet avoir été traitées en surface dans le but d'améliorer leur dispersion au sein de la matrice, ou de diminuer la viscosité du polymère chargé, ou de modifier les propriétés mécaniques de ce polymère chargé. Parmi les traitement de surface courants, on peut citer le traitement par des acides gras (par exemple, l'acide stéarique), par des silanes, des titanates, etc.

L'introduction de la ou des charges peut par ailleurs avoir différentes fonctions, selon la nature de la charge : colorant, antistatique, stabilisant, modification des propriétés mécaniques. Le choix de la ou des charges pour obtenir telle ou telle propriété particulière est à la portée de l'homme du métier. C'est ainsi que le noir de carbone en forte quantité (par exemple plus de 10%, voire plus de 20% en poids par rapport au poids total résines d'imprégnation et de matrice + fibres longues + charge(s)) peut servir à donner de la conductivité, et, de ce fait, à donner de l'antistatisme.

Comme on l'a bien laissé entendre ci-dessus, on peut utiliser une charge ou un mélange de charges organiques et/ou minérales. C'est ainsi que la charge peut comprendre du noir de carbone et une charge minérale ne comprenant pas de carbone. Par ailleurs, la charge peut fort bien ne pas comprendre de carbone et peut donc ne pas être du noir de carbone.

Il n'y a donc pas de limite inférieure concernant la quantité de charge(s) à incorporer dans la résine de matrice. C'est ainsi que la ou les charges peuvent être introduites, par exemple à titre de colorant, à raison de moins de 1% en poids par rapport au poids total résines d'imprégnation et de matrice + fibres longues + charges ; à titre d'exemple, on peut citer le noir de carbone.

Cependant, avantageusement, la charge ou les charges sont présentes dans une quantité suffisante pour faire disparaître la rugosité de surface des pièces moulées à partir de ces granulés, rugosité de surface due aux fibres longues de renforcement. A cet effet, on peut citer une quantité de charges de plus de 1% en poids, notamment d'au moins 2% en poids, en particulier de 2 à 30% en poids par rapport au poids total résines d'imprégnation et de matrice + fibres longues + charge(s).

Les matériaux selon la présente invention peuvent avoir la composition suivante, pour 100% en poids de (A) + (B) + (C) + (D) :
(A) 10 à 50% en poids, en particulier 20 à 40 % en poids, de fibres longues ; et
(B) 5 à 40 % en poids, en particulier 10 à 20 % en poids, de résine thermoplastique d'imprégnation ;
(C) 20 à 88% en poids, en particulier 40 à 70 % en poids, de résine de matrice (sans la ou les charges) ;
(D) jusqu'à 30% en poids, en particulier de 2 à 30% en poids, de la ou des charges,
ladite résine de matrice pouvant contenir également au moins un additif usuel, tel qu'un colorant ou un stabilisant.

Les fibres continues servant à renforcer les résines thermoplastiques sont connues. Elles sont organiques ou minérales. A titre d'exemple, on peut citer les rovings de fibres de verre, de silice, de carbone, ou encore d'aramide.

Comme il a été précisé, le polymère thermoplastique d'imprégnation doit être compatible avec le polymère thermoplastique de matrice. Cette compatibilité est un caractère, quoique bien connu de l'homme du métier et d'importance pratique considérable, dont la définition scientifique n'a jamais été donnée de façon tout à fait satisfaisante. Sans entrer dans les détails fort controversés de miscibilité réciproque partielle des polymères considérés, on estime ici que deux polymères sont compatibles s'il est possible de les mélanger de façon à obtenir une matière présentant une tenue mécanique voisine de, ou supérieure à, celle du plus faible des deux. Selon cette définition et à titre d'exemple, les couples :
- polyéthylène haute densité greffé - polyéthylène basse densité ;
- polyéthylène haute densité greffé - copolymère éthylène - acétate de vinyle (EVA) ;
- EVA greffé - poly(chlorure de vinyle) ;
- polypropylène greffé - polypropylène ;
- copolymère séquencé poly(éther-amide) - polyamide ;
- polyamide fonctionnalisé (par exemple α,ω diamines, α,ω diacides, α amine ω acide, monoamine) - polyamide ;
- EVA modifié - EVA ou polyéthylène basse densité (PEbd) ;
- polyéthylène basse densité linéaire (PEbd) greffé - PEbdl ou PEbd,
sont compatibles, tandis qu'un homopolymère de chlorure de vinyle et un homopolymère de styrène sont incompatibles.

On entend par polymère thermoplastique d'imprégnation, un polymère permettant d'augmenter la surface de contact intime fibre-polymère jouant ainsi le rôle d'agent de couplage. Les rôles des agents de couplage sont expliqués dans Polymer Engineering Composite, M.O.W. Richardson - Appl. Sc. Publ. 1977, les plus connus étant les organosilanes.

Le polymère thermoplastique d'imprégnation est habituellement choisi parmi les polymères de basse viscosité, ou encore parmi les polymères dont la polarité est accrue par rapport aux polymères correspondants d'origine.

Le polymère de basse viscosité est de préférence un polymère dont la viscosité de fusion (θf + 40°C) est au plus égale à celle d'un polypropylène d'indice de fluidité 20 (Melt Index) à 230°C sous 2,16 kg selon la norme ASTM D 1328.

Parmi les polymères de basse viscosité, on peut citer : les polymères modifiés par dégradation peroxydique, comme dans le cas par exemple du polypropylène, du polyamide, du polystyrène, ou encore les polymères résultant de la polyaddition d'un oligomère polyamide fonctionnalisé avec un coréactif, tel que, par exemple, un polyépoxy ou un polyisocyanate ou d'un oligomère de polypropylène fonctionnalisé avec un coréactif tel que, par exemple, un polyéther diol, le polybutadiène dihydroxylé ou un polyamide α,ω diamine. Ces polymères de basse viscosité sont également obtenus à partir de polyesters saturés, tels que polybutylène téréphtalate (PBT) ou polyéthylène téréphtalate (PET), dont les chaînes sont coupées par dégradation contrôlée de façon à obtenir un oligomère fonctionnel. Cette formation d'oligomère fonctionnel se réalise par malaxage à chaud du polyester saturé en présence de diamine et plus particulièrement de dodécanediamine.

Parmi les polymères dont la polarité est accrue par rapport aux polymères correspondants d'origine, on préfère les polymères possédant des sites polaires éventuellement réactifs. Les polymères possédant des sites polaires sont généralement des polymères modifiés soit par greffage soit par séquençage à partir, par exemple, d'anhydride maléique, d'acide acrylique, d'acétate de vinyle dans le cas du polyéthylène, du polypropylène ou des copolymères, ou encore plus généralement à partir de composés fournissant par exemples des sites polaires du type cétone, aldéhyde, acide, ester, cyano, aminé, etc...

Parmi les polymères modifiés par greffage ou séquençage particulièrement recommandés, on peut citer :
- le polypropylène greffé, tel que le polypropylène greffé anhydride maléique ou acide acrylique ;
- le poly(éthylène-vinylacétate) en tant que tel ou greffé anhydride maléique ;
- le polyéthylène haute densité greffé, tel que le polyéthylène haute densité greffé acide acrylique ou anhydride maléique ;
- le polyéthylène basse densité linéaire greffé, tel que le polyéthylène basse densité linéaire greffé acide acrylique ou anhydride maléique ;
- les copolymères séquencés poly(éther-amide).

Certains polymères d'imprégnation peuvent être directement préparés par greffage ou dégradation contrôlé in situ dans l'étape d'imprégnation des rovings. Pour ce faire, on fait réagir les constituants : polymère, agent de dégradation plus éventuellement agent de greffage, à l'état fondu dans l'extrudeuse alimentant la filière d'imprégnation. Dans le cas d'une dégradation par voie peroxydique, on choisit, de préférence, parmi les peroxydes ceux possédant une durée de demi-vie à la température de réaction, habituellement comprise entre 180 et 250°C, inférieure ou égale au temps de séjour du polymère dans l'extrudeuse. Les taux d'agent du greffage et/ou d'agent de dégradation sont généralement compris entre 0,5 et 3% en poids par rapport au poids de polymère de base.

On peut citer l'utilisation de résines d'imprégnation et de matrice qui comprennent toutes deux un polymère du propylène. Par polymère du propylène, on entend un polymère comprenant des unités polymérisées du propylène, le cas échéant avec un ou plusieurs comonomères tels que l'éthylène.

On peut en particulier citer l'utilisation, comme résine d'imprégnation, d'un polypropylène maléisé à 0,5-1,5% en poids d'anhydride maléique (par exemple, 1% en poids) de MFI ("melt flow index", indice de fusion) 1 à 1000 (par exemple 400), mesuré à 230°C sous 2,16 kg, ou un mélange d'un tel polypropylène avec un polypropylène homopolymère ayant un MFI de 1 à 1000 (par exemple 40), mesuré à 230°C sous 2,16 kg, et, en même temps, comme résine de matrice, un polypropylène ayant un MFI de 1 à 100 (par exemple 40) mesuré à 230°C sous 2,16 kg, le cas échéant avec une quantité mineure d'un polypropylène maléisé à 0,5-1,5% d'anhydride maléique, de MFI 1 à 1000 (par exemple 400) mesuré à 230°C sous 2,16 kg.

La résine d'imprégnation peut ne pas être ou ne pas comprendre un polymère à base de (méth)acrylate d'alkyle dans le cas d'une résine thermoplastique halogénée de matrice incorporant une charge solide.

La présente invention a également pour objet un procédé de fabrication d'un matériau de résine thermoplastique renforcée de fibres longues tel que défini ci-dessus, ce procédé étant caractérisé par le fait qu'il consiste à imprégner par extrusion lesdites fibres longues, sous forme de rovings, par une résine thermoplastique d'imprégnation dans une filière alimentée en tête d'équerre, lesdits rovings imprégnés étant ensuite repris, à une température supérieure à celle de fusion de la résine thermoplastique d'imprégnation, dans une seconde filière où ils sont gainés par la résine thermoplastique de matrice à laquelle au moins une charge a été incorporée.

Conformément à une caractéristique particulière de ce procédé, préalablement à l'imprégnation des rovings par la résine thermoplastique d'imprégnation, les rovings sont épanouis par passage dans une zone d'embarrage, et après l'imprégnation, les rovings sont tirés dans une seconde zone d'embarrage avant d'être conformés et de passer dans la seconde filière de gainage.

Les fibres continues imprégnées de la résine d'imprégnation sortent de la filière de conformation, la résine d'imprégnation se trouvant à l'état fondu. Elles se refroidissent de préférence au contact de l'air ambiant avent de pénétrer dans la seconde filière alimentée en résine de matrice à laquelle au moins une charge a été incorporée. Avant de pénétrer dans cette filière, les fibres continues imprégnées de la résine d'imprégnation sont en général à une température comprise entre 40 et 80°C.

La distance entre la filière de conformation des fibres imprégnées de résine thermoplastique d'imprégnation et la filière de gainage dépend des caractéristiques thermiques de la résine employée. Cette distance dépend également de la vitesse de tirage du matériau extrudé. Cette distance doit, de préférence, être la plus réduite possible et de façon pratique se trouve habituellement comprise entre 0,1 et 4 mètres.

Les rapports massiques polymère d'imprégnation sur polymère standard de matrice dépendent du taux massique de fibres visé en final.

Conformément à un mode de réalisation particulier du procédé selon l'invention, dans une première étape, on fait passer les rovings dans une zone d'embarrage pour les épanouir, on leur fait traverser une filière d'imprégnation alimentée, au moyen d'une extrudeuse, en résine thermoplastique d'imprégnation, les rovings imprégnés passent dans une seconde zone d'embarrage et ils traversent une filière de conformation, et, dans une seconde étape, les rovings imprégnés de résine thermoplastique de matrice traversent une filière de recouvrement, située sensiblement dans l'alignement de l'outillage de la première étape, alimentée, par une seconde extrudeuse, en résine thermoplastique de matrice à laquelle au moins une charge a été incorporée.

Concernant l'incorporation de la ou des charges dans la résine thermoplastique de matrice, on peut réaliser un pré-compound de la résine thermoplastique de matrice et de la ou des charges par malaxage avant extrusion, avec emploi d'un comalaxeur Buss par exemple, ou bien on peut ajouter directement la ou les charges sur l'extrudeuse qui alimente la filière de recouvrement.

Le procédé qui vient d'être décrit conduit à des rubans ou à des joncs que l'on découpe pour former des granulés. Les granulés ont généralement une longueur allant de 3 mm à 100 mm.

Une description plus détaillée des deux étapes du procédé selon l'invention a été faite dans le préambule de la présente description, avec référence à EP-B-0 342 080.

Les Exemples suivants illustrent la présente invention sans toutefois en limiter la portée. Dans ces Exemples :
- les pourcentages sont en poids sauf indication contraire ;
- les valeurs des indices de fusion (Melt Index) ont été mesurées à 230°C, sous 2,16 kg, conformément à la norme ISO 1133:91 ;
- les essais de flexion trois points (norme ISO 178) et de choc Charpy (norme ISO 179) ont été réalisés sur des éprouvettes de 80 x 10 x 4 mm³, découpées dans des plaques injectées suivant le sens parallèle à l'injection ; et
- l'aspect de surface a été évalué à partir du critère de profil Ra retenu dans l'industrie automobile française selon la norme E 05 015, Ra correspondant à l'écart arithmétique moyen du profil.

La filière d'imprégnation utilisée est du même type que celle de la Figure 1 de FR-2 630 967 et comporte les zones suivantes :
- Zone 1 d'embarrage :
   - longueur : 70 mm
   - largeur : 145 mm
   - entrefer : 5 mm
   - entrée évasée et une chicane au dôme de 10 mm de hauteur
- Zone 2 de filière d'imprégnation :
   - longueur : 125 mm
   - largeur : 100 mm
   - six canaux d'alimentation de section rectangulaire 20 x 5 mm
   - entrefer en sortie de zone : 5 mm
- Zone 3 d'embarrage :
   - longueur : 200 mm
   - largeur : 100 mm
   - embarrage sinusoïdal à 7 crêtes
   - amplitude inter-crêtes : 25 mm
   - entrefer : 3 mm
- Zone 3 bis de trempage (identique à la zone 4)
   - longueur : 500 mm
   - largeur : 145 mm
- Zone 4 de conformation :
   - filière à six trous de 1,8 à 2 mm de diamètre
   - longueur : 175 mm
   - largeur : 100 mm.

### EXEMPLE 1

Dans une première étape, on réalise l'imprégnation des fibres de verre dans une filière d'imprégnation alimentée par une extrudeuse monovis en équerre. Cette extrudeuse est elle-même alimentée en polypropylène maléisé à 1% d'anhydride maléique, ayant un indice de fusion (Melt Index) d'environ 400. Elle est maintenue à la température moyenne de 200°C.

On fait passer dans la filière d'imprégnation maintenue à 320°C six rovings de verre E 2400 tex. On tire à la vitesse de 22,2 mètres/minute des joncs possédant un taux massique de verre d'environ 70%, par des orifices de 1,8 mm de diamètre.

Ces joncs passent ensuite dans une filière de gainage placée à 20 cm de la première. Cette seconde filière, sensiblement dans l'alignement de la première, est maintenue à la température de 270°C. Elle est montée en équerre sur une extrudeuse monovis maintenue à la température moyenne de 280°C et alimentée par le mélange suivant, réalisé au préalable sur un comalaxeur Buss :
- 60% de polypropylène homopolymère ayant un indice de fusion d'environ 40 ;
- 20% de mica ; et
- 20% de billes de verre pleines.

A partir des orifices de 5,4 mm de cette filière, sont tirés des joncs de taux de verre massique 20% environ qui sont ensuite refroidis et granulés à la longueur de 15 mm.

Les propriétés mécaniques et l'aspect de surface du produit moulé par injection sont donnés dans le Tableau 1.

### EXEMPLE 2 (comparatif)

On reprend l'Exemple 1 à ceci près que l'extrudeuse en équerre de la filière de gainage est alimentée par un polypropylène homopolymère ayant un indice de fusion d'environ 40.

Les propriétés mécaniques et l'aspect de surface du produit moulé par injection sont donnés dans le Tableau 1. On constate par ailleurs qualitativement un moins bon aspect de surface des plaques injectées à partir des granulés que dans le cas de l'Exemple 1.

### EXEMPLE 3

Dans une première étape, on réalise l'imprégnation des fibres de verre dans une filière d'imprégnation alimentée par une extrudeuse monovis en équerre. Cette extrudeuse est elle-même alimentée par un mélange de :
- 77% de polypropylène homopolymère ayant un indice de fusion d'environ 40 , et
- 23% de polypropylène maléisé à 1% d'anhydride maléique, ayant un indice de fusion d'environ 400.

L'extrudeuse est maintenue à la température moyenne de 220°C.

On fait passer dans la filière d'imprégnation maintenue à 400°C douze rovings de verre E 1200 tex, associés deux par deux au préalable par l'intermédiaire de colliers en céramique. On tire à la vitesse de 20 mètres/minute des joncs possédant un taux massique de verre d'environ 60%, par des orifices de 2 mm de diamètre.

Ces joncs passent ensuite dans une filière de gainage placée à 20 cm de la première. Cette seconde filière, sensiblement dans l'alignement de la première, est maintenue à la température de 250°C. Elle est montée en équerre sur une extrudeuse monovis maintenue à la température moyenne de 220°C et alimentée par le mélange suivant, réalisé au préalable sur un comalaxeur Buss :
- 89% de polypropylène homopolymère ayant un indice de fusion d'environ 40 ; et
- 1,5% de polypropylène maléisé à 1% d'anhydride maléique, ayant un indice de fusion d'environ 400 ;
- 8% de wollastonite ; et
- 1,5% de talc.

Les propriétés mécaniques et l'aspect de surface du produit moulé par injection sont donnés dans le Tableau 1.

### EXEMPLE 4 (comparatif)

On reprend l'Exemple 3 à ceci près que l'extrudeuse en équerre de la filière de gainage est alimentée par un polypropylène homopolymère ayant un indice de fusion d'environ 40.

Les propriétés mécaniques et l'aspect de surface du produit moulé par injection sont donnés dans le Tableau 1.

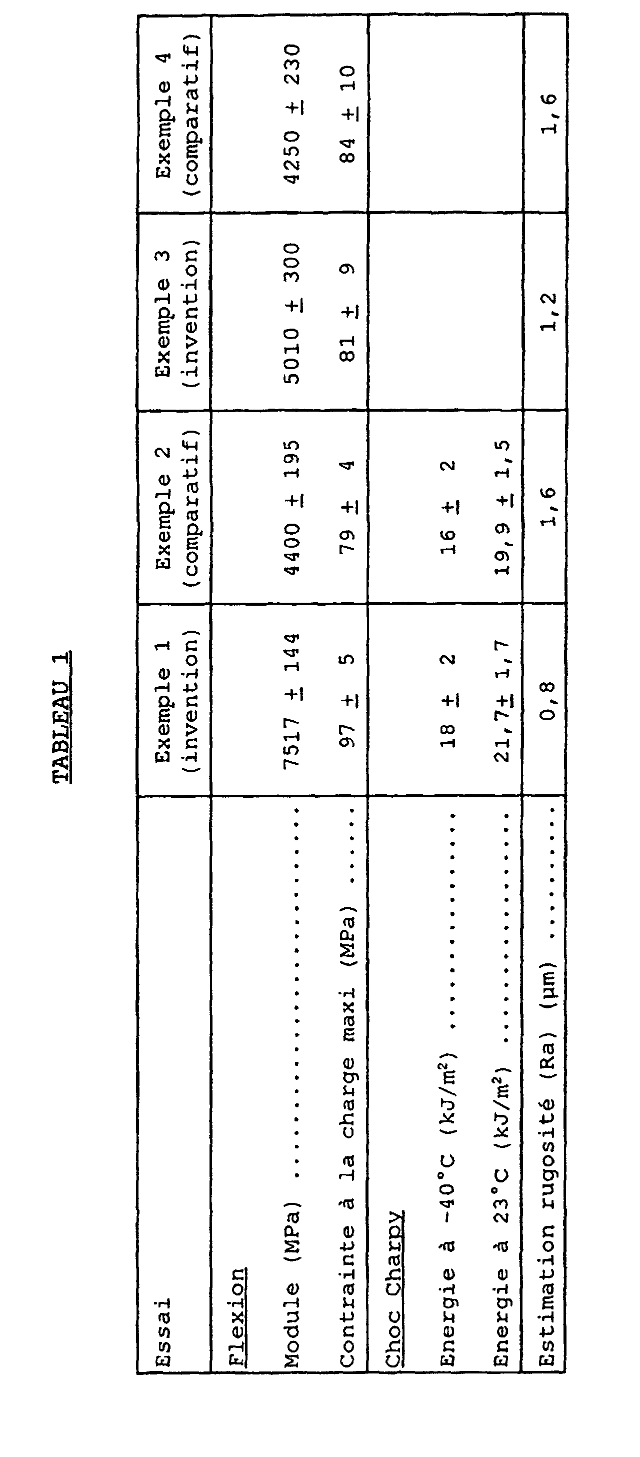

## Revendications

1. Matériau de résine thermoplastique renforcée par des fibres longues, adapté au moulage notamment par injection, compression ou extrusion transfert, ledit matériau comprenant des fibres continues sensiblement parallèles noyées individuellement dans une résine thermoplastique d'imprégnation, l'ensemble étant gainé de la matière thermoplastique destinée à être renforcée par lesdites fibres, appelée résine thermoplastique de matrice, **caractérisé par le fait qu'**au moins une charge a été incorporée à la résine thermoplastique de matrice.

2. Matériau selon la revendication 1, **caractérisé par le fait que** la charge ou au moins l'une des charges est une charge organique.

3. Matériau selon la revendication 2, **caractérisé par le fait que** la charge organique est constituée par du noir de carbone.

4. Matériau selon la revendication 3, **caractérisé par le fait que** le noir de carbone est un noir de carbone ayant une surface spécifique de 50 à 1000 m²/g.

5. Matériau selon la revendication 1, **caractérisé par le fait que** la charge ou au moins l'une des charges est une charge minérale.

6. Matériau selon la revendication 5, **caractérisé par le fait qu'**une charge minérale a une surface spécifique inférieure à 50 m²/g et plus généralement inférieure à 20 m²/g.

7. Matériau selon l'une des revendications 5 ou 6, **caractérisé par le fait que** la ou les charges minérales sont choisies parmi :
(a) les charges minérales classiques telles, que :
(a1) la wollastonite, le kaolin calciné ou non, le talc, le mica, la craie précipitée ou non, le quartz, la silice, CaSO₄, la dolomite (CaCO₃•MgCO₃), la montmorillonite (aluminosilicate), ces charges ayant une taille généralement comprise entre 0,05 µm et 1 mm ;
(a2) les billes de verre, ayant un diamètre généralement compris entre 0,5 µm et 5 mm ;
(a3) les fibres de verre ou de carbone, ayant une longueur généralement comprise entre 100 microns et 20 mm et un diamètre généralement compris en 0,5 micron et 1 mm ;
(b) les charges anti-feu, telles que Al(OH)₃, Mg(OH)₂, la huntite (3MgCO₃•CaCO₃), l'hydromagnésite (3MgCO₃•Mg(OH)₂•3H₂O), Sb₂O₃, Sb₂O₅, l'ammonium (poly)phosphate et la mélamine (poly)phosphate, ces charges ayant une taille généralement comprise entre 0,05 µm et 1 mm ;
(c) les charges à haute densité, telles que BaSO₄, ZrSiO₄, Fe₃O₄, ces charges ayant une taille généralement comprise entre 0,05 µm et 1 mm ;
(d) les charges conductrices, telles que :
(d1) les fibres métalliques, telles que les fibres d'aluminium, de cuivre, de fer, d'acier inoxydable, ces fibres ayant une longueur généralement comprise entre 100 microns et 20 mm et un diamètre généralement compris entre 0,5 micron et 1 mm ;
(d2) les fibres de verre recouvertes de métal tel que le nickel, ces fibres ayant une longueur généralement comprise entre 100 microns et 20 mm et un diamètre généralement compris entre 0,5 micron et 1 mm ;
(d3) les particules métalliques, telles que les flocons d'aluminium, ayant une dimension généralement de 0,1 à 10 mm² x 5 µm à 1 mm d'épaisseur ; et
(d4) les particules métallisées, telles que le mica recouvert de nickel ou les billes de verre recouvertes d'argent.

8. Matériau selon l'une des revendications 5 ou 6, **caractérisé par le fait que** la ou les charges minérales sont des charges particulaires, ayant un diamètre moyen de taille des particules allant de 20 nm à 500 µm, plus particulièrement de 50 nm à 100 µm.

9. Matériau selon l'une des revendications 1 à 8, **caractérisé par le fait que** la charge ou au moins une charge a été traitée en surface.

10. Matériau selon l'une des revendications 1 à 9, **caractérisé par le fait que** la charge ou les charges sont présentes dans une quantité suffisante pour faire disparaître la rugosité de surface des pièces moulées à partir de ce matériau, rugosité de surface due aux fibres longues de renforcement.

11. Matériau selon l'une des revendications 1 à 10, **caractérisé par le fait que** la ou les charges représentent plus de 1% en poids du poids total résines d'imprégnation et de matrice + fibres longues + charge(s).

12. Matériau selon la revendication 10, **caractérisé par le fait que** la ou les charges représentent au moins 2% en poids du poids total résines d'imprégnation et de matrice + fibres longues + charge(s).

13. Matériau selon la revendication 12, **caractérisé par le fait que** la ou les charges représentent 2 à 30% en poids du poids total résines d'imprégnation et de matrice + fibres longues + charge(s).

14. Matériau selon l'une des revendications 1 à 13, **caractérisé par le fait qu'**il a la composition suivante, pour 100% en poids de (A) + (B) + (C) + (D) :
(A) 10 à 50% en poids de fibres longues ; et
(B) 5 à 40 % en poids de résine thermoplastique d'imprégnation ;
(C) 20 à 88% en poids de résine de matrice (sans la ou les charges) ;
(D) jusqu'à 30% en poids de la ou des charges,
ladite résine de matrice pouvant contenir au moins un additif usuel, tel qu'un colorant ou un stabilisant.

15. Matériau selon l'une des revendications 1 à 14, **caractérisé par le fait qu'**il ne comprend pas de noir de carbone.

16. Matériau selon l'une des revendications 1 à 15, **caractérisé par le fait que** les fibres longues sont des fibres de verre, de silice, de carbone ou d'aramide.

17. Matériau selon l'une des revendications 1 à 16, **caractérisé par le fait que** les résines d'imprégnation et de matrice comprennent toutes deux un polymère du propylène.

18. Matériau selon l'une des revendications 1 à 17, **caractérisé par le fait que** la résine d'imprégnation est un polypropylène maléisé à 0,5-1,5 % en poids d'anhydride maléique, ayant un MFI de 1 à 1000, mesuré à 230°C sous 2,16 kg, ou un mélange d'un tel polypropylène avec un polypropylène homopolymère ayant un MFI de 1 à 1000, mesuré à 230°C sous 2,16 kg, et la résine de matrice est un polypropylène ayant un MFI de 1 à 100, mesuré à 230°C sous 2,16 kg, le cas échéant avec une quantité mineure d'un polypropylène maléisé à 0,5-1,5% en poids d'anhydride maléique, ayant un MFI de 1 à 1000, mesuré à 230°C sous 2,16 kg.

19. Matériau selon l'une des revendications 1 à 18, **caractérisé par le fait que** la résine d'imprégnation n'est pas ou ne comprend pas un polymère à base de (méth)acrylate d'alkyle dans le cas d'une résine thermoplastique halogénée de matrice incorporant une charge solide.

20. Granulés obtenus par découpe de joncs ou de rubans du matériau tel que défini à l'une des revendications 1 à 19.

21. Procédé de fabrication d'un matériau de résine thermoplastique renforcée de fibres longues, tel que défini à l'une des revendications 1 à 19, **caractérisé par le fait qu'**il consiste à imprégner par extrusion lesdites fibres longues, sous forme de rovings, par une résine thermoplastique d'imprégnation dans une filière alimentée en tête d'équerre, lesdits rovings imprégnés étant ensuite repris, à une température supérieure à celle de fusion de la résine thermoplastique d'imprégnation, dans une seconde filière où ils sont gainés par la résine thermoplastique de matrice à laquelle au moins une charge a été incorporée.

22. Procédé selon la revendication 21, **caractérisé par le fait que**, préalablement à l'imprégnation des rovings par la résine thermoplastique d'imprégnation, les rovings sont épanouis par passage dans une zone d'embarrage, et **par le fait qu'**après l'imprégnation, les rovings sont tirés dans une seconde zone d'embarrage avant d'être conformés et de passer dans la seconde filière de gainage.

23. Procédé selon l'une des revendications 21 ou 22, **caractérisé par le fait que** les rovings imprégnés de résine thermoplastique d'imprégnation sortent de la première filière, la résine se trouvant à l'état fondu, et entrent dans la seconde filière à une température comprise entre 40 et 80°C.

24. Procédé selon l'une des revendications 21 à 22, **caractérisé par le fait que**, dans une première étape, on fait passer les rovings dans une zone d'embarrage pour les épanouir, qu'on leur fait traverser une filière d'imprégnation alimentée, au moyen d'une extrudeuse, en résine thermoplastique d'imprégnation, que les rovings imprégnés passent dans une seconde zone d'embarrage et qu'ils traversent une filière de conformation, et **par le fait que**, dans une seconde étape, les rovings imprégnés de résine thermoplastique d'imprégnation traversent une filière de recouvrement, située sensiblement dans l'alignement de l'outillage de la première étape, alimentée, par une seconde extrudeuse, en résine thermoplastique de matrice à laquelle au moins une charge a été incorporée.

25. Procédé selon l'une des revendications 21 à 24, **caractérisé par le fait qu'**on réalise un pré-compound de la résine thermoplastique de matrice et de la ou des charges par malaxage avant extrusion.

26. Procédé selon l'une des revendications 21 à 25, **caractérisé par le fait qu'**on ajoute directement la ou les charges sur l'extrudeuse qui alimente la filière de recouvrement.

27. Procédé selon l'une des revendications 21 à 26, **caractérisé par le fait qu'**il conduit à des joncs ou des rubans que l'on découpe pour former des granulés.

## Patentansprüche

1. Durch Langfasern verstärktes thermoplastisches Harzmaterial, das zur Formherstellung, insbesondere durch Spritzguß, Warmpressen oder Transferextrusion, ausgelegt ist, wobei das Material einzeln in ein thermoplastisches Imprägnierharz eingebettete, in etwa parallele Endlosfasern umfaßt, wobei das Ganze von dem durch diese Fasern zu verstärkenden Thermoplasten, thermoplastisches Matrixharz genannt, ummantelt wird, **dadurch gekennzeichnet, daß** wenigstens ein Füllstoff in das thermoplastische Matrixharz eingearbeitet wurde.

2. Material nach Anspruch 1, **dadurch gekennzeichnet, daß** der Füllstoff oder wenigstens einer der Füllstoffe ein organischer Füllstoff ist.

3. Material nach Anspruch 2, **dadurch gekennzeichnet, daß** der organische Füllstoff aus Ruß besteht.

4. Material nach Anspruch 3, **dadurch gekennzeichnet, daß** der Ruß ein Ruß mit einer spezifischen Oberfläche von 50 bis 1000 m²/g ist.

5. Material nach Anspruch 1, **dadurch gekennzeichnet, daß** der Füllstoff oder wenigstens einer der Füllstoffe ein anorganischer Füllstoff ist.

6. Material nach Anspruch 5, **dadurch gekennzeichnet, daß** ein anorganischer Füllstoff eine spezifische Oberfläche unter 50 m²/g und allgemeiner unter 20 m²/g hat.

7. Material nach einem der Ansprüche 5 oder 6, **dadurch gekennzeichnet, daß** der oder die anorganischen Füllstoffe ausgewählt sind aus:
(a) klassischen anorganischen Füllstoffen, wie:
(a1) Wollastonit, kalziniertem oder nicht kalziniertem Kaolin, Talk, Glimmer, gefällter oder ungefällter Kreide, Quarz, Silica, CaSO₄, Dolomit (CaCo₃·MgCO₃), Montmorillonit (Alumosilicat), wobei diese Füllstoffe eine Größe von im allgemeinen zwischen 0,05 µm und 1 mm haben;
(a2) Glaskügelchen, die einen Durchmesser von im allgemeinen zwischen 0,5 µm und 5 mm haben;
(a3) Glas- oder Kohlefasern, die eine Länge von im allgemeinen zwischen 100 µm und 20 mm und einen Durchmesser von im allgemeinen zwischen 0,5 µm und 1 mm haben;
(b) flammhemmenden Füllstoffen, wie Al(OH)₃, Mg(OH)₂, Huntit (3MgCO₃·CaCO₃), Hydromagnesit (3MgCO₃·Mg(OH)₂·3H₂O), Sb₂O₃, Sb₂O₅, Ammoniumpolyphosphat und Melaminpolyphosphat, wobei diese Füllstoffe eine Größe von im allgemeinen zwischen 0,05 µm und 1 mm haben;
(c) Füllstoffen mit hoher Dichte, wie BaSO₄, ZrSiO₄, Fe₃O₄, wobei diese Füllstoffe eine Größe von im allgemeinen zwischen 0,05 µm und 1 mm haben;
(d) leitfähigen Füllstoffen, wie:
(d1) Metallfasern, wie Aluminium-, Kupfer-, Eisen-, Edelstahlfasern, wobei diese Fasern eine Länge von im allgemeinen zwischen 100 µm und 20 mm und einen Durchmesser von im allgemeinen zwischen 0,5 µm und 1 mm haben;
(d2) mit Metallen wie Nickel überzogenen Glasfasern, wobei diese Fasern eine Länge von im allgemeinen zwischen 100 µm und 20 mm und einen Durchmesser von im allgemeinen zwischen 0,5 µm und 1 mm haben;
(d3) Metallteilchen, wie Aluminiumflakes, mit einer Dimension von im allgemeinen 0,1 bis 10 mm² x 5 µm bis 1 mm Dicke; und
(d4) metallisierten Teilchen, wie mit Nickel überzogener Glimmer oder mit Siber überzogene Glaskügelchen.

8. Material nach einem der Ansprüche 5 oder 6, **dadurch gekennzeichnet, daß** der oder die anorganischen Füllstoffe partikuläre Füllstoffe sind, die einen mittleren Teilchengrößendurchmesser von 20 nm bis 500 µm, insbesondere von 50 nm bis 100 µm haben.

9. Material nach einem der Ansprüche 1 bis 8, **dadurch gekennzeichnet, daß** der Füllstoff oder wenigstens ein Füllstoff oberflächenbehandelt wurde.

10. Material nach einem der Ansprüche 1 bis 9, **dadurch gekennzeichnet, daß** der Füllstoff oder die Füllstoffe in ausreichender Menge vorliegen, um die Oberflächenrauheit der Formteile aus diesem Material, Oberflächenrauheit als Folge der Langfasern zur Verstärkung, zu beseitigen.

11. Material nach einem der Ansprüche 1 bis 10, **dadurch gekennzeichnet, daß** der oder die Füllstoffe mehr als 1 Gew.-% des Gesamtgewichts von Imprägnier- und Matrixharz + Langfasern + Füllstoff(en) ausmachen.

12. Material nach Anspruch 10, **dadurch gekennzeichnet, daß** der oder die Füllstoffe wenigstens 2 Gew.-% des Gesamtgewichts von Imprägnier- und Matrixharz + Langfasern + Füllstoff(en) ausmachen.

13. Material nach Anspruch 12, **dadurch gekennzeichnet, daß** der oder die Füllstoffe 2 bis 30 Gew.-% des Gesamtgewichts von Imprägnier- und Matrixharz + Langfasern + Füllstoff(en) ausmachen.

14. Material nach einem der Ansprüche 1 bis 13, **dadurch gekennzeichnet, daß** es die folgende Zusammensetzung pro 100 Gew.-% von (A) + (B) + (C) + (D) aufweist:
(A) 10 bis 50 Gew.-% Langfasern; und
(B) 5 bis 40 Gew.-% thermoplastisches Imprägnierharz;
(C) 20 bis 88 Gew.-% Matrixharz (ohne den oder die Füllstoffe);
(D) bis zu 30 Gew.-% des oder der Füllstoffe,
wobei das Matrixharz wenigstens einen üblichen Zusatzstoff, wie einen Farbstoff oder ein Stabilisierungsmittel, enthalten kann.

15. Material nach einem der Ansprüche 1 bis 14, **dadurch gekennzeichnet, daß** es keinen Ruß umfaßt.

16. Material nach einem der Ansprüche 1 bis 15, **dadurch gekennzeichnet, daß** die Langfasern Glas-, Quarz-, Kohle- oder Aramidfasern sind.

17. Material nach einem der Ansprüche 1 bis 16, **dadurch gekennzeichnet, daß** das Imprägnier- und das Matrixharz alle beide ein Propylenpolymer umfassen.

18. Material nach einem der Ansprüche 1 bis 17, **dadurch gekennzeichnet, daß** das Imprägnierharz ein mit 0,5 bis 1,5 Gew.-% Maleinsäureanhydrid gepfropftes Polypropylen mit einem MFI von 1 bis 1000, gemessen bei 230°C unter 2,16 kg, ist, oder eine Mischung aus einem solchen Polypropylen mit einem Polypropylen-Homopolymer mit einem MFI von 1 bis 1000, gemessen bei 230°C unter 2,16 kg, und das Matrixharz ein Polypropylen mit einem MFI von 1 bis 100, gemessen bei 230°C unter 2,16 kg ist, gegebenenfalls mit einer geringen Menge eines mit 0,5 bis 1,5 Gew.-% Maleinsäureanhydrid gepfropften Polypropylens mit einem MFI von 1 bis 1000, gemessen bei 230°C unter 2,16 kg.

19. Material nach einem der Ansprüche 1 bis 18, **dadurch gekennzeichnet, daß** das Imprägnierharz im Falle eines halogenierten thermoplastischen Matrixharzes, das einen festen Füllstoff eingearbeitet hat, kein Polymer auf Basis von Alkyl(meth)acrylat ist oder ein solches umfaßt.

20. Granulat, erhalten durch Zerkleinern von Stäben oder Bändern des wie in einem der Ansprüche 1 bis 19 definierten Materials.

21. Verfahren zur Herstellung eines durch Langfasern verstärkten thermoplastischen Harzmaterials, wie es in einem der Ansprüche 1 bis 19 definiert ist, **dadurch gekennzeichnet, daß** es darin besteht, die Langfasern, in Form von Rovings, durch Extrusion mit einem thermoplastischen Imprägnierharz in einer mit einem Querspritzkopf gespeisten Düse zu imprägnieren, wobei die imprägnierten Rovings anschließend bei einer Temperatur oberhalb der Schmelztemperatur des thermoplastischen Imprägnierharzes wieder in einer zweiten Düse aufgenommen werden, wo sie mit dem thermoplastischen Matrixharz, in das wenigstens ein Füllstoff eingearbeitet wurde, ummantelt werden.

22. Verfahren nach Anspruch 21, **dadurch gekennzeichnet, daß** die Rovings vor der Imprägnierung der Rovings mit dem thermoplastischen Imprägnierharz durch Einziehen in eine Verteilerzone ausgebreitet werden, und dadurch, daß die Rovings nach der Imprägnierung in eine zweite Verteilerzone gezogen werden, bevor sie geformt werden und in die zweite Düse zur Ummantelung laufen.

23. Verfahren nach einem der Ansprüche 21 oder 22, **dadurch gekennzeichnet, daß** die mit thermoplastischem Imprägnierharz imprägnierten Rovings aus der ersten Düse austreten, wobei sich das Harz in geschmolzenem Zustand befindet, und in die zweite Düse bei einer Temperatur eintreten, die zwischen 40 und 80°C liegt.

24. Verfahren nach einem der Ansprüche 21 bis 23, **dadurch gekennzeichnet, daß** man die Rovings in einem ersten Schritt in eine Verteilerzone laufen läßt, um sie auszubreiten, daß man sie eine Imprägnierdüse durchlaufen läßt, die mittels eines Extruders mit thermoplastischem Imprägnierharz gespeist wird, daß die imprägnierten Rovings in eine zweite Verteilerzone laufen und daß sie eine Düse zur Formgebung durchlaufen, und dadurch, daß die mit thermoplastischem Imprägnierharz imprägnierten Rovings in einem zweiten Schritt eine Düse zur Ummantelung, die ungefähr in Linie mit dem Werkzeug des ersten Schritts liegt, durchlaufen, die von einem zweiten Extruder mit thermoplastischem Matrixharz gespeist wird, in das wenigstens ein Füllstoff eingearbeitet wurde.

25. Verfahren nach einem der Ansprüche 21 bis 24, **dadurch gekennzeichnet, daß** man durch Kneten vor Extrusion eine Vorgemisch aus dem thermoplastischen Matrixharz und dem oder den Füllstoffen erzeugt.

26. Verfahren nach einem der Ansprüche 21 bis 25, **dadurch gekennzeichnet, daß** man den oder die Füllstoffe direkt auf den Extruder gibt, der die Düse zur Ummantelung speist.

27. Verfahren nach einem der Ansprüche 21 bis 26, **dadurch gekennzeichnet, daß** es Stäbe oder Bänder liefert, die man zur Bildung von Granulat zerkleinert.

## Claims

1. A long fibre-reinforced thermoplastic resin material suitable for moulding, in particular by injection, compression or extrusion transfer moulding, said material comprising substantially parallel continuous fibres individually embedded in a thermoplastic impregnating resin, said assembly being sheathed with the thermoplastic material which is intended to be reinforced by said fibres and is known as the thermoplastic matrix resin, **characterised in that** at least one filler has been incorporated into the thermoplastic matrix resin.

2. A material according to claim 1, **characterised in that** the filler or at least one of the fillers is an organic filler.

3. A material according to claim 2, **characterised in that** the organic filler consists of carbon black.

4. A material according to claim 3, **characterised in that** the carbon black is a carbon black having a specific surface area of 50 to 1000 m²/g.

5. A material according to claim 1, **characterised in that** the filler or at least one of the fillers is an inorganic filler.

6. A material according to claim 5, **characterised in that** an inorganic filler has a specific surface area of less than 50 m²/g and more generally of less than 20 m²/g·

7. A material according to one of claims 5 or 6, **characterised in that** the inorganic filler or fillers are selected from among:
(a) conventional inorganic fillers such as:
(a1) wollastonite, calcined or uncalcined kaolin, talcum, mica, precipitated or non-precipitated chalk, quartz, silica, CaSO₄, dolomite (CaCO₃·MgCO₃), montmorillonite (aluminosilicate), these fillers having a size of generally between 0.05 µm and 1 mm;
(a2) glass beads having a diameter of generally between 0.5 µm and 5 mm;
(a3) glass or carbon fibres having a length of generally between 100 microns and 20 mm and a diameter of generally between 0.5 microns and 1 mm;
(b) fireproofing fillers, such Al(OH)₃, Mg(OH)₂, huntite (3MgCO₃·CaCO₃), hydromagnesite (3MgCO₃·Mg(OH)₂·3H₂O), Sb₂O₃, Sb₂O₅, ammonium (poly)phosphate and melamine (poly)phosphate, these fillers having a size of generally between 0.05 µm and 1 mm;
(c) high density fillers such as BaSO₄, ZrSiO₄, Fe₃O₄, these fillers having a size of generally between 0.05 µm and 1 mm;
(d) conductive fillers such as:
(d1) metal fibres, such as aluminium, copper, iron or stainless steel fibres, these fibres having a length of generally between 100 microns and 20 mm and a diameter of generally between 0.5 microns and 1 mm;
(d2) glass fibres coated with metal such as nickel, these fibres having a length of generally between 100 microns and 20 mm and a diameter of generally between 0.5 micron and 1 mm;
(d3) metal particles, such as aluminium flakes, having a dimension of generally 0.1 to 10 mm² x 5 µm to 1 mm in thickness; and
(d4) metallised particles, such as mica coated with nickel or glass beads coated with silver.

8. A material according to one of claims 5 or 6, **characterised in that** the inorganic filler or fillers are particulate fillers having an average circumferential diameter of the particles of from 20 nm to 500 µm, more particularly from 50 nm to 100 µm.

9. A material according to one of claims 1 to 8, **characterised in that** the filler or at least one filler has been surface treated.

10. A material according to one of claims 1 to 9, **characterised in that** the filler or fillers are present in a sufficient quantity to eliminate the surface roughness of the parts moulded from this material, the surface roughness being due to the long reinforcing fibres.

11. A material according to one of claims 1 to 10, **characterised in that** the filler or fillers represent more than 1% by weight of the total weight of the impregnating and matrix resins + long fibres + filler(s).

12. A material according to claim 10, **characterised in that** the filler or fillers represent at least 2% by weight of the total weight of the impregnating and matrix resins + long fibres + filler(s).

13. A material according to claim 12, **characterised in that** the filler or fillers represent to 2 to 30% by weight of the total weight of the impregnating and matrix resins + long fibres + filler(s).

14. A material according to one of claims 1 to 13, **characterised in that** it is of the following composition, per 100% by weight of (A) + (B) + (C) + (D) :
(A) 10 to 50% by weight of long fibres; and
(B) 5 to 40% by weight of thermoplastic impregnating resin;
(C) 20 to 88% by weight of matrix resin (without the filler or fillers);
(D) up to 30% by weight of the filler or fillers, said matrix resin possibly containing at least one conventional additive, such as a colorant or stabiliser.

15. A material according to one of claims 1 to 14, **characterised in that** it comprises no carbon black.

16. A material according to one of claims 1 to 15, **characterised in that** the long fibres are glass, silica, carbon or aramid fibres.

17. A material according to one of claims 1 to 16, **characterised in that** the impregnating and matrix resins both comprise a propylene polymer.

18. A material according to one of claims 1 to 17, **characterised in that** the impregnating resin is a polypropylene maleated with 0.5-1.5% by weight of maleic anhydride having with an MFI of 1 to 1000, measured at 230°C under a load of 2.16 kg, or a mixture of such a polypropylene with a homopolymeric polypropylene having an MFI of 1 to 1000, measured at 230°C under a load of 2.16 kg, and the matrix resin is a polypropylene having an MFI of 1 to 100, measured at 230°C under a load of 2.16 kg, possibly with a minor quantity of a polypropylene maleated with 0.5-1.5% by weight of maleic anhydride having an MFI of 1 to 1000, measured at 230°C under a load of 2.16 kg.

19. A material according to one of claims 1 to 18, **characterised in that** the impregnating resin is not or does not comprise an alkyl (meth)acrylate based polymer in the case of a thermoplastic halogenated matrix resin incorporating a solid filler.

20. Pellets obtained by chopping rods or tapes of the material as defined in one of claims 1 to 19.

21. A process for the production of a long fibre-reinforced thermoplastic resin material as defined in one of claims 1 to 19, **characterised in that** it consists in extrusion impregnating said long fibres, in the form of rovings, with a thermoplastic impregnating resin in a side-fed die, said impregnated rovings then being introduced, at a temperature greater than the melting temperature of the thermoplastic impregnating resin, into a second die, where they are sheathed by the thermoplastic matrix resin into which at least one filler has been incorporated.

22. A process according to claim 21, **characterised in that**, prior to impregnation of the rovings with the thermoplastic impregnating resin, the rovings are opened up by being passed into a tension zone, and **in that**, after impregnation, the rovings are drawn into a second tension zone before being formed and passing into the second sheathing die.

23. A process according to one of claims 21 or 22, **characterised in that** the rovings impregnated with thermoplastic impregnating resin leave the first die, the resin being in the molten state, and enter the second die at a temperature of between 40 and 80°C.

24. A process according to one of claims 21 to 22, **characterised in that**, in a first step, the rovings are passed into a tension zone to open them up, they are passed through an impregnating die fed, by means of an extruder, with thermoplastic impregnating resin, that the impregnated rovings pass into a second tension zone and pass through a forming die, and **in that**, in a second step, the rovings impregnated with thermoplastic impregnating resin pass through a coating die, located substantially in alignment with the tooling of the first step, fed, by means of a second extruder, with thermoplastic matrix resin into which at least one filler has been incorporated.

25. A process according to one of claims 21 to 24, **characterised in that** a pre-compound of the thermoplastic matrix resin and of the filler or fillers is prepared by kneading prior to extrusion.

26. A process according to one of claims 21 to 25, **characterised in that** the filler or fillers are added directly to the extruder feeding the coating die.

27. A process according to one of claims 21 to 26, **characterised in that** it gives rise to rods or tapes which are chopped to form pellets.
